# FASCICULE DE BREVET EUROPEEN

(11) **EP 3 052 286 B1**
(45) Date de publication et mention de la délivrance du brevet: **15.07.2020**
(21) Numéro de dépôt: 14789326.7
(22) Date de dépôt: 03.10.2014
(51) Int. Cl.: B29B 11/16, B29C 70/48, B29C 70/24, B29D 99/00, B29L 31/08

(54) **ENSEMBLE DE COMPACTAGE ET PROCEDE DE FABRICATION D'UNE AUBE COMPOSITE DE TURBOMACHINE**
KOMPAKTIERUNGSANLAGE UND VERFAHREN ZUR HERSTELLUNG EINER TURBOMASCHINENVERBUNDSCHAUFEL
COMPACTING ASSEMBLY AND METHOD FOR MANUFACTURING A TURBOMACHINE COMPOSITE BLADE

(30) Priorité: 04.10.2013 US 201361886725 P; 27.06.2014 FR 1456021
(43) Date de publication de la demande: 10.08.2016
(73) Titulaire: Safran Aircraft Engines, 75015 Paris (FR)
(72) Inventeur: MARCHAL, Yann, F-77550 Moissy-Cramayel Cedex (FR); GIMAT, Matthieu, F-77550 Moissy-Cramayel Cedex (FR)
(74) Mandataire: Cabinet Beau de Loménie
(86) Numéro de dépôt international: PCT/FR2014/052515
(87) Numéro de publication internationale: WO 2015/049475

(56) Documents cités:
- EP-A1- 1 777 063
- CN-A- 1 951 664
- FR-A1- 2 950 286
- US-A- 2 746 514
- US-A1- 2012 223 456

## Description

### DOMAINE TECHNIQUE

Le présent exposé concerne un ensemble de compactage et un procédé pour la fabrication d'une aube composite de turbomachine, ainsi qu'une aube composite de turbomachine. L'aube composite peut être une aube du type comprenant une préforme en fils ou fibres tissé(e)s en trois dimensions et un liant maintenant la disposition relative entre les fils de la préforme. Ladite préforme peut être formée de fils de chaîne et de fils de trame, la direction des fils de chaîne formant la direction longitudinale de la préforme.

En particulier, le présent procédé se rapporte à la fabrication d'une aube de soufflante pour une turbomachine, notamment un turboréacteur. Cependant, il est également envisagé de fabriquer une aube destinée à un compresseur basse pression où les températures atteintes en fonctionnement sont compatibles avec la résistance thermomécanique de ce type d'aube. Il est également envisagé de fabriquer des aubes de soufflante non carénée (ou « open rotor ») ou encore des aubes à plateforme intégrée.

### ARRIERE PLAN

De manière habituelle, les aubes de soufflantes réalisées en matériau composite, en particulier en fibres de carbone, sont réalisées à partir d'un empilement de plis unidirectionnels pré-imprégnés que l'on place dans un moule en orientant différemment les plis successifs, avant compactage et polymérisation à l'autoclave. Cette technique très délicate requiert d'effectuer les opérations d'empilage de plis de manière manuelle, ce qui est long et coûteux.

Il a aussi été proposé de préparer des préformes tissées de fibres sèches qui sont ensuite assemblées par couture, avant une imprégnation par résine par injection dans un moule fermé. Une alternative a consisté à réaliser une seule préforme tissée qui est montée avec un ou plusieurs inserts pleins avant injection. Ces solutions (documents de brevet US 5 672 417 et US 5 013 216) présentent toutefois l'inconvénient de nécessiter l'assemblage de plusieurs pièces et de créer dans ces zones d'assemblage, des sites privilégiés de fragilité, par exemple de délaminage, ce qui est très néfaste en termes de résistance mécanique, notamment pour la tenue aux impacts.

Pour surmonter ces inconvénients, le document de brevet FR 2 861 143 a proposé de réaliser une préforme en fils ou fibres tissé(e)s en trois dimensions permettant de former à elle seule, après découpe éventuelle et injection du liant, la pièce finale formant toutes les parties de l'aube de turbomachine, sans recourir à l'utilisation d'inserts ou de tout autre élément rapporté.

En particulier, on utilise le procédé de fabrication présenté dans le document de brevet FR 2 892 339, au cours duquel la préforme tissée puis découpée est mise en forme dans un moule avant d'injecter le liant et de procéder au durcissement de ce dernier.

Cependant, il persiste aujourd'hui un certain nombre de problème liés à la manière dont cette mise en forme est réalisée.

### PRESENTATION GENERALE

Le présent exposé concerne un ensemble de compactage permettant d'éviter les inconvénients précités. En particulier, cet ensemble de compactage permet de réaliser un pré-compactage de la préforme.

Cet ensemble de compactage peut être utilisé pour une préforme obtenue par tissage en trois dimensions de fils et destinée à former une aube de turbomachine composite, ladite préforme comprenant à la fois la pale, le pied de l'aube et, entre la pale et le pied, l'échasse de l'aube.

Cet ensemble de compactage comprend un moule de conformation délimitant un logement ouvert vers le haut, pour recevoir une préformé tissée (qui peut être préalablement découpée), et un outil de compactage verticalement mobile coopérant avec le moule de conformation pour former un ensemble de compactage permettant de compacter ladite préforme lorsqu'elle est placée dans le logement.

L'ensemble de compactage peut définir une direction longitudinale et un plan médian vertical parallèle à la direction longitudinale.

L'outil de compactage peut être configuré pour descendre en direction du moule de conformation.

L'outil de compactage comprend au moins une portion de pied. Par exemple, l'outil de compactage comprend une portion de pied et une portion d'échasse. Dans ce dernier cas, les portions de pied et d'échasse sont séparées l'une de l'autre. Lorsqu'elles sont séparées, la portion d'échasse peut elle-même être divisée en au moins trois blocs de compactage séparés, parmi lesquels un bloc de compactage central, lesdits blocs de compactage étant configurés pour descendre en direction du moule de conformation de façon indépendante. En particulier, les blocs de compactage peuvent être descendus de façon séquentielle, en commençant par le bloc de compactage central.

Le présent exposé porte également sur un procédé de fabrication d'une aube composite de turbomachine utilisant un ensemble de compactage, et sur une aube composite de turbomachine.

### BREVE DESCRIPTION DES DESSINS

D'autres avantages et caractéristiques de l'invention ressortiront à la lecture de la description suivante faisant référence aux dessins annexés dans lesquels:
- la figure 1 est une vue générale en perspective d'un exemple de préforme, après découpage,
- la figure 2 illustre une étape de réalisation d'un exemple de procédé de fabrication,
- les figures 3 et 4 sont des vues en coupe selon les directions III et IV de la figure 2 montrant l'effet du compactage sur le profil de deux portions différentes de la préforme, avec un ensemble de compactage selon un premier mode de réalisation de l'invention,
- la figure 5 est une vue partielle de la préforme de la figure 1, montrant de façon agrandie le pied et l'échasse,
- la figure 6 est une vue en coupe analogue à celle de la figure 4, montrant un autre exemple d'ensemble de compactage,
- la figure 7 est une vue en perspective de l'outil de compactage de l'ensemble de compactage de la figure 6,
- les figures 8 et 9 sont des représentations schématiques comparatives de parties d'aubes composites, ces aubes ayant été fabriquées différemment.
- les figures 10 et 11 illustrent la manière de mesurer l'angle de déviation de deux fibres ayant deux configurations de flambage typiques.

### DESCRIPTION DETAILLEE D'EXEMPLE(S)

Des exemples de réalisation sont décrits en détail ci-après, en référence aux dessins annexés. Ces exemples illustrent les caractéristiques et les avantages de l'invention. Il est toutefois rappelé que l'invention ne se limite pas à ces exemples.

Selon un exemple de mise en œuvre, le procédé de fabrication débute par une première étape a) consistant à réaliser une préforme tridimensionnelle par tissage, la préforme tissée comportant des fils de chaîne 20a et des fils de trame 20b. Dans ces deux groupes de fils, on prévoit des fils traceurs 22 identifiables visuellement des autres fils et situés régulièrement au moins à la surface de la préforme.

Les fils de chaine et de trame peuvent appartenir, par exemple, au groupe formé des fibres de carbone, des fibres de verre, des fibres de silice, des fibres de carbure de silicium, des fibres d'alumine, des fibres aramides et des fibres de polyamides aromatiques.

La préforme tissée d'une seule pièce est ensuite découpée conformément à une deuxième étape b) du procédé. Plus exactement, cette préforme tissée est détourée par découpage du contour d'après un abaque tridimensionnel prédéterminé prévu pour qu'après la déformation, la préforme respecte la géométrie de la pièce finie. Cette découpe peut être réalisée par jet d'eau et/ou par des moyens mécaniques (ciseaux, cutter, scie....) et/ou par découpe au laser.

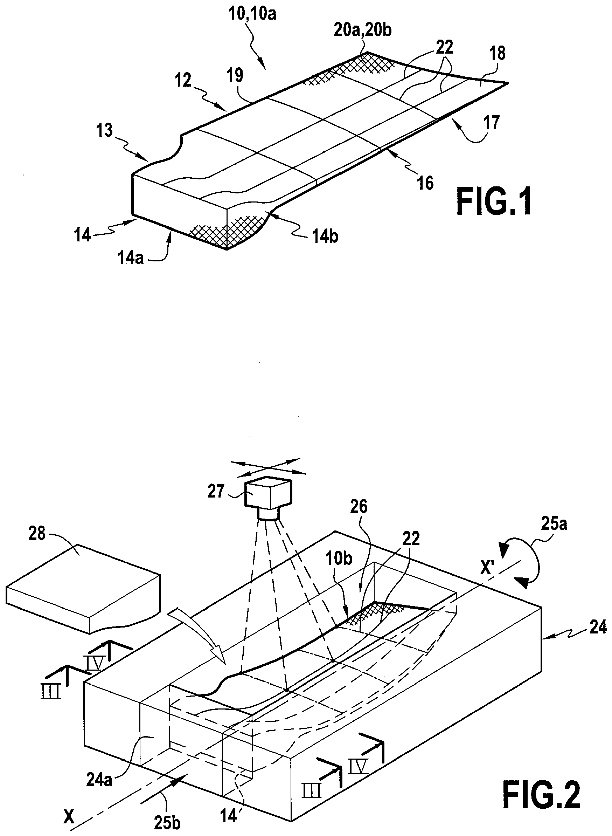

On aboutit à une préforme découpée 10a visible sur la figure 1. On retrouve les parties destinées à former la pale 12 et le pied 14 de l'aube, ainsi que l'échasse 13 qui est la partie de transition entre la pale 12 et le pied 14. En particulier, les fils de chaîne 20a et les fils de trame 20b utilisés pour le tissage en trois dimensions sont des fibres de carbone (noires) et des fibres de verre ou en kevlar (blanches) forment des fils traceurs 22 situés essentiellement à la surface de la préforme, le long de la direction principale longitudinale parallèle aux fils de chaîne 20a et le long de la direction transversale parallèle aux fils de trame 20b. De cette façon, les fils traceurs 22 apparaissent de couleur blanche sur le reste de la préforme qui est noire, et les fils traceurs 22 sont donc très visibles. En plus, ces fils traceurs sont détectables par les technologies classiques de contrôle non destructif (type tomographie par rayons X ou par ultrasons) permettant de vérifier la conformité de la pièce finale.

En particulier, ces fils traceurs 22 sont présents ici en surface des deux faces (respectivement destinées à former la paroi d'intrados 17 et la paroi d'extrados 18) de l'aube à des emplacements prédéterminés afin de servir de point de référence pour le positionnement en vue de la découpe et d'autres étapes de traitement de la préforme, comme exposé ci-après.

Lors de cette étape de découpe, il est prévu de conserver une série de fils traceurs 22 situés à la surface de la préforme le long d'au moins une face de référence 16, qui dans le cas illustré est la face destinée à former le bord d'attaque.

Ensuite, on réalise une pré-déformation de la préforme découpée 10a lors d'une étape c).

En particulier, pendant l'étape c) on réalise ladite pré-déformation en plaçant la préforme découpée 10a dans un moule de conformation 24 (figure 2) présentant différentes parties délimitant entre elles une cavité (logement 26) destinée à loger la préforme découpée 10a et présentant des marques servant de référence pour le positionnement d'au moins certains des fils traceurs 22.

Différents systèmes de repérage et de positionnement de la préforme découpée 10a peuvent être utilisés, en particulier un projecteur laser 27 (voir la figure 2) qui projette un faisceau lumineux à l'emplacement idéal d'un fil traceur 22 de sorte qu'il est alors aisé de déplacer en conséquence le fil traceur 22 correspondant pour obtenir le positionnement prédéterminé.

Alternativement ou en supplément, des masques, reprenant le contour et/ou la position de tout ou partie des fils traceurs 22, peuvent être disposés sur la préforme afin de contrôler son bon positionnement.

Lorsqu'on dispose la préforme découpée 10a dans le moule de conformation 24, on place la préforme découpée 10a dans une configuration qui la déforme appliquant une rotation (flèche 25a sur la figure 2) autour d'un axe XX' parallèle à sa direction principale, ce qui a pour conséquence de vriller la pale autour de cet axe.

Dans certains cas, on peut aussi prévoir que le moule de conformation 24 présente une partie mobile 24a, coulissante et destinée à venir se positionner contre l'extrémité libre du pied 14 de la préforme afin de venir exercer une contrainte (flèche 25b sur la figure 2) réalisant la déformation souhaitée de cette portion 14 de la préforme, ou évitant certains types de déformation dans cette partie tandis qu'on exerce une déformation sur d'autres portions de la préforme 10b.

Il faut comprendre que de nombreuses possibilités différentes sont envisageables pour conformer la préforme découpée 10a grâce à l'utilisation des fils traceurs 22 comme éléments de référence pour positionner la préforme 10a dans le moule de conformation 24.

La stratégie de placement de la préforme découpée 10a dans le moule de conformation 24 est également liée au profil de découpe ou de détourage réalisé auparavant, selon la ou les surface(s) de référence choisie(s), en particulier parmi le pied, la tête, le bord d'attaque 16, le bord de fuite 19 ou toute autre zone prédéterminée.

La mise en place de la préforme découpée 10a dans le moule de conformation 24 peut être suffisante pour réaliser l'ensemble des déformations nécessaires pour aboutir à la forme souhaitée finale. Cependant, dans certains cas, on peut également réaliser cette étape c) en plusieurs sous étapes.

On injecte ensuite dans ledit moule d'injection un liant comprenant une résine thermodurcissable afin d'imprégner toute la préforme et de maintenir la disposition relative entre les fils de la préforme ; on chauffe ledit moule d'injection ; et on sort du moule une pièce moulée composite présentant sensiblement la forme et les dimensions de ladite aube.

Dans une étape d) qui suit l'étape c) et avant de réaliser l'injection du liant, on réalise un pré-compactage d'au moins une portion de la préforme pré-déformée 10b, comprenant le pied 14 et l'échasse 13, sur toute la largeur de la préforme pré-déformée 10b. Ce pré-compactage bloque certaines fibres dans une position voulue, ou tout au moins limite leurs possibilités de mouvement, d'où une géométrie intermédiaire de la préforme, qui se rapproche encore davantage de la forme finale voulue. Le fait de bloquer en position les fibres du pied et celles de l'échasse, garantit un meilleur positionnement des fibres dans l'aube fabriquée et permet, notamment, de limiter le phénomène de flambage des fibres habituellement constaté dans ces parties de l'aube. Le bon positionnement des fibres permet d'obtenir, à son tour, de bonnes propriétés mécaniques dans le pied et l'échasse de l'aube. Un tel avantage s'avère particulièrement intéressant du fait que le pied et l'échasse sont les parties de l'aube les plus sollicitées mécaniquement en fonctionnement.

L'outil de compactage 28 utilisé à cet effet, visible schématiquement et partiellement sur la figure 2, peut être réalisé en complétant le moule de conformation 24 par les équipements nécessaires. En effet, l'outil de compactage 28 est mobile (montée et descente) et doit pouvoir être porté à une température de l'ordre de 100 °C.

Au cours de cette étape d), ce sont les produits d'ensimage enrobant les fils et qui sont utilisés pour faciliter le tissage, qui permettent le blocage de la position relative des fibres de la portion pré-compactée.

Par la suite, on réalise un mouillage de la préforme pré-compactée 10c et on réalise un séchage, par exemple en étuve, ce par quoi on fournit une préforme rigidifiée. En fait, cette rigidification va figer de façon suffisante la conformation donnée lors de l'étape c) à la préforme découpée 10a, devenue la préforme pré-déformée 10b, pour qu'on puisse la placer ultérieurement aisément dans le moule d'injection 24 sans modifier sensiblement sa forme qui correspond à celle de la pré-déformation précitée.

Si nécessaire, on peut éventuellement ajouter un tackifiant à l'intérieur de la préforme, par exemple une résine diluée, notamment de type époxyde, le tout étant de pouvoir, sous l'effet de la chaleur et de la pression qui s'exercent pendant l'étape de pré-compactage d), de coller entre elles les fibres de carbone tissées pour éviter que la préforme pré-déformée 10b ne subisse une quelconque déformation ultérieure, notamment pendant l'étape d'injection.

L'outil de compactage 28 présente une forme et des dimensions qui lui permettent de s'insérer dans le logement 26 du moule de conformation 24 pour permettre de compacter la préforme tissée à un taux volumique de fibres intermédiaire par rapport au taux volumique de fibres définitif de la pièce finale. Par exemple, avec l'outil de compactage 28, on vise à réaliser une préforme compactée présentant un taux volumique de fibres compris entre 35% et 55%, de sorte que la pièce finale, après injection, présente un taux volumique de fibres compris entre 50% et 65%.

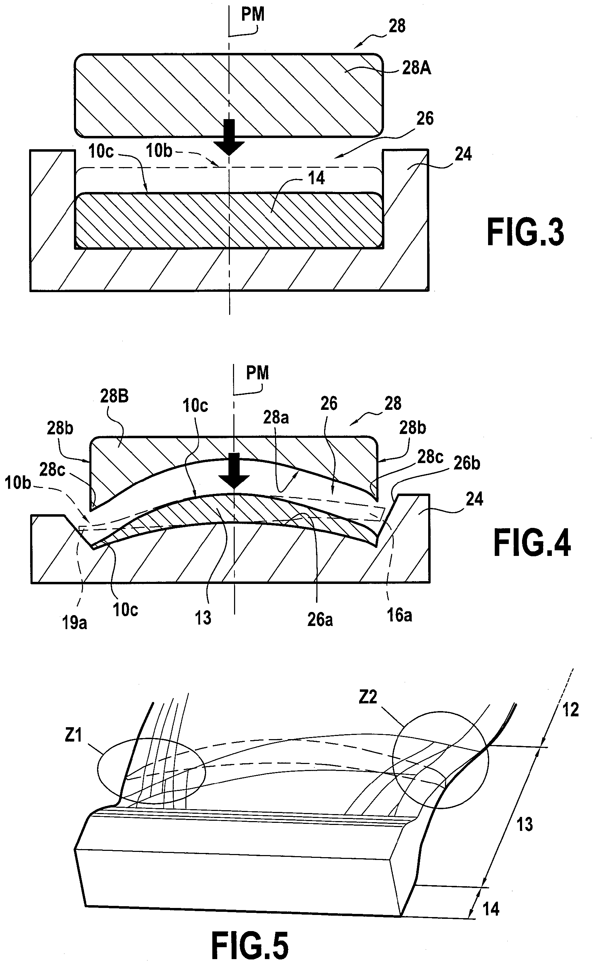

On se reportera aux figures 3 et 4, représentant en coupe transversale un ensemble de compactage selon un exemple de réalisation (moule de conformation 24 et outil de compactage 28) et la préforme pré-déformée 10b, au niveau du pied 14 (figure 3) et de l'échasse 13 (figure 4), afin de comprendre la manière dont la pré-déformation est appliquée sur ces parties 13, 14 différentes de la préforme pré-déformée 10b (ligne en traits pointillés) pour aboutir à la préforme compactée 10c (ligne en trait plein).

Pour le pied 14 (figure 3), le logement 26 du moule de conformation 24 présente une section rectangulaire et l'outil de compactage 28 présente une portion de pied 28A dont la section rectangulaire est complémentaire de celle du logement 26.

Pour l'échasse 13 (figure 4), le logement 26 du moule de conformation 24 présente une section avec un fond 26a convexe et des côtés 26b évasés en direction de l'ouverture du logement 26. L'outil de compactage 28 présente une portion d'échasse 28B dont la section comporte des côtés 28b sensiblement verticaux et un fond 28a, destiné à venir en regard du fond convexe du moule de conformation 24. Ce fond 28a est concave avec un profil présentant des rayons de courbure plus importants que le profil convexe du fond du logement 26 du moule de conformation 24.

L'outil de compactage 28 selon cet exemple de réalisation est monobloc de sorte que lors de son mouvement, il descend (ou monte) tout entier dans (ou depuis) le logement 26 du moule de conformation 24, en comprimant ainsi la préforme pré-déformée 10b.

Pour éviter d'abîmer les fibres de la préforme pré-déformée 10b, et notamment de les pincer, les surfaces du moule de conformation 24 et l'outil de compactage 28 tournées vers le logement ne présentent aucune arête (saillante ou rentrante) abrupte mais sont constituées de faces avec des angles adoucis par des raccords arrondis ou rayonnés formant des congés.

Dans une telle situation, lorsque l'outil de compactage 28 descend, si l'on considère la portion d'échasse 28B venant compacter l'échasse 13 de la préforme (figure 4), ce sont en premier lieu les bords latéraux 16a et 19a de la préforme pré-déformée 10b, destinés à former respectivement le bord d'attaque 16 et le bord de fuite 19, qui rentrent en contact avec l'outil de compactage 28 à l'emplacement des bords latéraux 28c du fond 28a. Ensuite, le contact se fait progressivement avec toute la surface de l'échasse 13 tournée en regard de l'outil de compactage 28, en finissant par la zone (bande) centrale de cette surface, cette zone centrale passant par un plan médian PM de l'ensemble de compactage.

Ce plan médian PM, qui n'est pas forcément un plan de symétrie pour l'ensemble de compactage et pour la préforme, est vertical, parallèle à l'axe XX' orienté selon la direction principale de la préforme, et se trouve à mi-distance à la fois entre les bords latéraux 26b du logement 26 du moule de conformation 24 et entre les bords latéraux 28b de l'outil de compactage 28.

Cette configuration peut avoir parfois certains inconvénients s'agissant de la pré-déformation de l'échasse 13 : ainsi, dans le cas illustré sur la figure 5, les bords latéraux 16a et 19a de la préforme pré-déformée 10b étant d'une part plus fins en épaisseur et subissant une flexion plus grande que le reste de l'échasse, les fibres 20 formant la préforme subissent un flambage, qui peut être préjudiciable à la bonne résistance thermomécanique de l'aube finale.

Les zones de la préforme découpée 10a qui subissent ce flambage indésirable sont indiquées sur la figure 5 au niveau des deux emplacements Z1 et Z2 correspondant aux bords fins de l'échasse 13 situés à proximité de la pale 12.

Pour surmonter les inconvénients précités, selon un mode de réalisation, l'outil de compactage peut comporter au moins trois blocs de compactage séparés, parmi lesquels un bloc de compactage central passant par ledit plan médian et deux blocs de compactage latéraux situés aux extrémités latérales dudit outil de compactage, lesdits blocs de compactage étant aptes à descendre un à un en direction du moule de conformation de façon indépendante, en commençant par le bloc de compactage central.

De cette manière, l'outil de compactage peut être formé d'au moins trois parties et on peut faire descendre ces parties à des moments différents, en commençant avec le bloc de compactage central qui descend en premier afin que le premier contact entre l'outil de compactage et la préforme découpée est réalisée au niveau de la zone centrale de la surface de l'échasse tournée en regard de l'outil de compactage.

De cette manière, grâce à l'ensemble de compactage de l'invention, les bords latéraux de l'échasse de la préforme sont compactés en dernier lieu, ce qui permet de minimiser, voire d'éviter le flambage de fibres de ces zones de faible épaisseur lors du pré-compactage.

En particulier, l'outil de compactage peut comprendre un nombre impair de blocs de compactage séparés, de façon à former une géométrie avec un bloc de compactage central passant par ledit plan médian et de part et d'autre de ce bloc de compactage central, un nombre identique d'autres blocs de compactage.

Un outil de compactage multi-bloc présente l'avantage de permettre, en outre, de doser le niveau de pré-compactage exercé par chacun des blocs de compactage sur la préforme, qui peut se mesurer par le taux volumique de fibres intermédiaire résultant de ce pré-compactage.

Dans certains modes de réalisation, lesdits blocs de compactage sont aptes à descendre un à un en direction du moule de conformation selon un ordre qui compacte toute la largeur de ladite préforme en commençant par ledit bloc de compactage central puis chaque bloc de compactage adjacent à celui précédemment descendu, et ce jusqu'au bloc de compactage latéral.

Dans certains modes de réalisation, ledit outil de compactage comporte au moins une portion de pied et une portion d'échasse et la portion d'échasse comporte au moins trois blocs de compactage séparés. La portion de pied peut, quant à elle, être multibloc ou monobloc. Lorsque la portion de pied est multibloc, elle peut être divisée en au moins trois blocs de compactage séparés, dont un bloc de compactage central.

Dans certains modes de réalisation, lesdits blocs de compactage sont aptes à descendre en direction du moule de conformation, en commençant par le bloc de compactage central, puis tous les blocs de compactage se trouvant sur l'un des côté du plan médian, de préférence, un à un et de proche en proche depuis le bloc de compactage central jusqu'au premier bloc de compactage latéral, et enfin tous les blocs de compactage se trouvant sur l'autres des côté du plan médian, de préférence, un à un et de proche en proche depuis le bloc de compactage central jusqu'au deuxième bloc de compactage latéral.

Selon une possibilité alternative, lesdits blocs de compactage sont aptes à descendre en direction du moule de conformation de façon symétrique par rapport au plan médian.

Dans certains modes de réalisation, tout l'outil de compactage 128 est divisé en au moins trois blocs de compactage séparés, parmi lesquels un bloc de compactage central 128₁ passant par plan médian PM de l'outil de compactage 128, lesdits blocs de compactage étant aptes à descendre en direction du moule de conformation 24 de façon indépendante, en commençant par le bloc de compactage central 128₁.

L'outil de compactage 128 peut englober la zone de transition entre le pied 14 et la pale 12, à savoir l'échasse 13, et ce pour maîtriser les déformations induites par le compactage dans cette zone de transition. A cet effet, la portion d'échasse 128B de l'outil de compactage 128 peut remonter dans l'échasse 13, jusqu'à une hauteur de plus de 50 mm et de préférence d'environ 70mm au-dessus des portées 14b (voir figure 1).

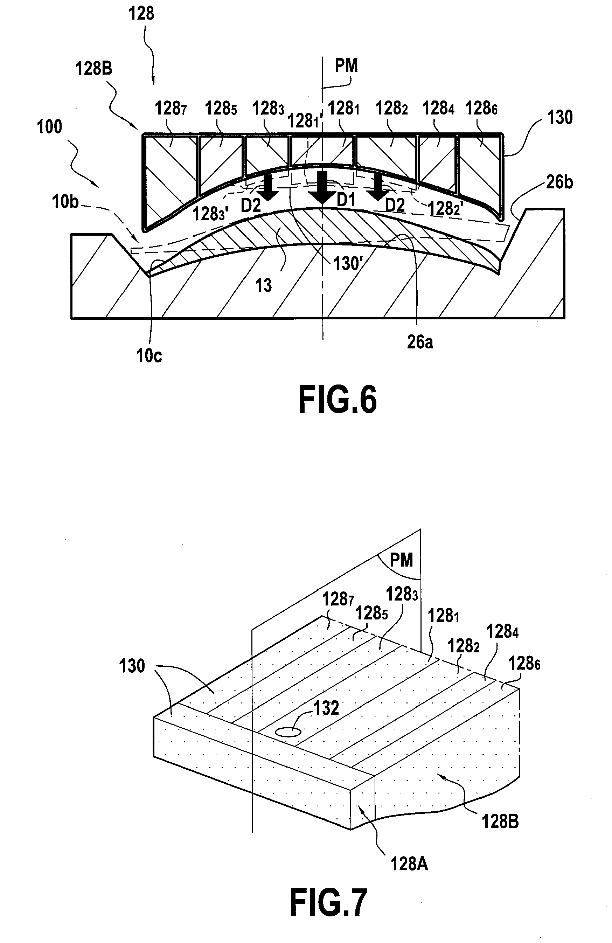

Dans l'exemple des figures 6 et 7, l'outil de compactage 128 comprend une portion de pied 128A et une portion d'échasse 128B séparées. La portion de pied 128A et la portion d'échasse 128B constituent ainsi des portions de l'outil de compactage indépendantes.

En particulier, comme illustré, la portion de pied 128A peut être monobloc et la portion d'échasse 128B peut comporter au moins trois blocs de compactage séparés, parmi lesquels un bloc de compactage central 128₁ passant par le plan médian PM de l'outil de compactage 128, lesdits blocs de compactage séparés de la portion d'échasse 128B étant aptes à descendre en direction du moule de conformation 24 de façon indépendante, en commençant par le bloc de compactage central 128₁. Dans l'exemple, la portion d'échasse 128B de l'outil de compactage 128 est divisée en sept blocs de compactage séparés 128₁, 128₂, 128₃, 128₄, 128₅, 128₆, 128₇, répartis autour et de part et d'autre du plan médian PM.

De cette façon, on peut décomposer le mouvement de descente de l'outil de compactage 128. Par exemple, on peut descendre indépendamment la portion de pied 128A et la portion d'échasse 128B. La portion d'échasse 128B peut, quant à elle, être descendue en commençant par le bloc de compactage central 128₁ passant par plan médian PM de l'outil de compactage 128 (flèche descendante D1 et ligne en traits pointillés 128₁' sur la figure 6), puis les deux blocs de compactage 128₂ et 128₃ situés de part et d'autre du bloc de compactage central 128₁ (flèches descendante D2 et D3 et lignes en traits pointillés 128₂' et 128₃' sur la figure 6), et ainsi de suite jusqu'aux deux blocs de compactage latéraux 128₆ et 128₇ situés aux extrémités latérales de l'outil de compactage 128.

Dans ce mode de réalisation, le mouvement de descente du bloc de pied unique constituant la portion de pied 128A, est par exemple initié avant le début de la descente du bloc de compactage central 128₁ de la portion d'échasse 128B, ou bien simultanément au début de la descente du bloc de compactage central 128₁ de la portion d'échasse 128B, avec une vitesse différente ou égale à celle du bloc de compactage central 128₁ de la portion d'échasse 128B.

Selon une autre possibilité, le mouvement de descente du bloc de pied unique constituant la portion de pied 128A peut être entièrement réalisé avant le début de la descente du bloc de compactage central 128₁ de la portion d'échasse 128B : de cette façon, on peut bloquer le pied avant toute manipulation du reste de la préforme.

Ce mode de réalisation permet de gérer la forme donnée au pied 14 de la préforme pré-déformée 10c, par la forme de la face inférieure du bloc de pied 128A, et son taux de compaction, par le réglage de la force exercée dans la position le plus basse, de façon autonome à ceux du bloc d'échasse 128B : cette configuration facilite l'obtention d'un taux de compaction des portées (faces latérales du pied 14) satisfaisant dans la pièce finale.

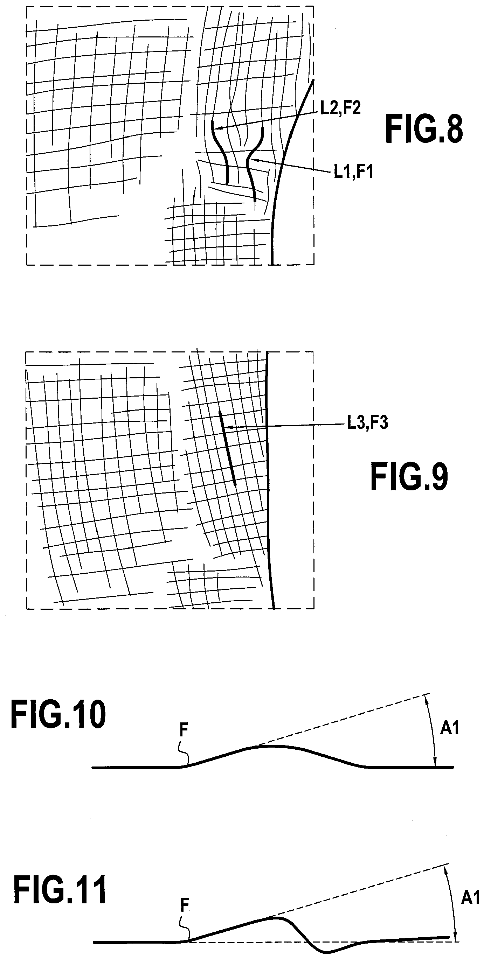

En outre, le fait de bloquer en position les fibres du pied 14 (ou tout au moins de limiter leurs possibilités de mouvement) au moyen du bloc de pied 128A avant de compacter l'échasse 13 au moyen du bloc d'échasse 128B améliore encore le positionnement des fibres dans l'aube fabriquée. Cet aspect associé au fait de descendre les blocs de compactage 128₁ à 128₇ en direction du moule de conformation de façon indépendante, en commençant par le bloc de compactage central, réduit significativement le phénomène de flambage indésirable au niveau des zones Z1 et Z2, repérées sur la fig. 5 et correspondant aux bords fins de l'échasse 13 situés à proximité de la pale 12. Les représentations comparatives des fig. 8 et 9 illustrent ce résultat.

La représentation de la fig. 8 montre une aube composite comprenant une préforme tissée en trois dimensions imprégnée de liant, ce liant maintenant la disposition relative entre les fibres de la préforme. Cette aube a été fabriquée suivant le procédé décrit plus loin, à partir d'une préforme pré-compactée à l'aide d'un outil de compactage 28 monobloc tel que celui de la fig. 2. La couche extérieure de la préforme tissée est visible sur la fig. 8. La zone de l'aube montrée sur la fig. 8 correspond à la zone Z1 repérée sur la fig. 5, c'est-à-dire à la zone de l'échasse 13 qui longe le bord d'attaque et qui est adjacente à la pale 12. Dans cette zone Z1, le bord de l'échasse 13 est particulièrement fin. Plusieurs inscriptions ont été tracées sur la surface représentée de la préforme 10, dont les lignes L1 et L2. Ces lignes L1 et L2 ont été tracées en suivant respectivement deux portions de fibres F1 et F2 de la couche extérieure de la préforme tissée 10. La direction principale des fibres F1, F2 est sensiblement verticale sur la fig. 8. Les lignes L1 et L2, qui représentent localement la trajectoire des deux portions de fibres F1 et F2 sont courbes, ce qui illustre le fait que les fibres F1 et F2 dévient de leur direction principale localement. On parle du flambage des fibres F1 et F2 pour désigner un tel phénomène. Le flambage est quantifié par la mesure de l'angle de déviation A1 des fibres F1 et F2. Les figures 10 et 11 illustrent respectivement la manière dont cet angle A1 est mesuré pour deux fibres F dans deux configurations de flambage typiques. Dans les cas de flambage repérés sur la fig. 8 par les lignes L1 et L2, l'angle de déviation A1 des fibres F1 et F2 est d'au moins 30°.

La fig. 9 est une représentation analogue à celle de la fig. 8 montrant une aube composite comprenant une préforme tissée en trois dimensions imprégnée de liant. Cette aube a été fabriquée suivant le même procédé que celle de la fig. 8 à l'exception de l'étape de pré-compactage de la préforme 10. Ici, la préforme 10 a été pré-compactée au moyen d'un outil de compactage 128 tel que celui de la fig. 7. La couche extérieure de la préforme tissée est visible sur la fig. 9. La zone de l'aube montrée sur la fig. 9 correspond à la zone Z1 repérée sur la fig. 5. Une ligne L3 a été tracée en suivant une portion d'une fibre F3 appartenant à la couche extérieure de la préforme 10. On a pu constater une absence de flambage, ou tout du moins un flambage limité pour la fibre F3 et toutes les fibres adjacentes situées dans la zone Z1. En particulier, on a pu constater que l'angle de déviation A1 des fibres dans cette zone Z1 était inférieur à 20° et, plus particulièrement, inférieur à 5°. Des constatations similaires ont été faites dans la zone Z2 repérée sur la fig. 5, c'est-à-dire dans la zone de l'échasse 13 qui longe le bord de fuite et qui est adjacente à la pale 12.

Dans certains modes de réalisation, l'outil de compactage 128 comporte en outre une peau déformable 130 (par exemple un film épais de silicone) qui recouvre au moins toute la face de ladite portion d'échasse 128B de l'outil de compactage 128 destinée à être tournée en regard du moule de conformation 24.

Dans l'exemple de la figure 6, cette peau déformable 130 recouvre quasiment tout l'outil de compactage 128.

Selon une variante non représentée, cette peau recouvre uniquement la portion d'échasse 128B de l'outil de compactage 128, soit seulement la face de ladite portion d'échasse 128B de l'outil de compactage 128 tournée en regard du moule de conformation 24, soit toutes les faces de ladite portion d'échasse 128B.

Comme on peut le voir sur la figure 6, avec une telle peau souple 130, il est possible de ne pas entraver le mouvement de descente progressif des blocs de compactage séparés 128₁, 128₂, 128₃, 128₄, 128₅, 128₆ et 128₇, grâce à la déformation et l'extension réversible de cette peau 130 (voir la déformée 130' de la peau), tout en évitant le pincement des fils de trame 20a ou des fils de chaîne 20b de la préformé pré-déformée 10b.

Comme illustré sur la figure 7, de façon optionnelle, l'outil de compactage 128 comporte au moins une fenêtre 132 permettant de visualiser la position d'au moins un fil traceur lorsque la préforme est placée dans le logement délimité entre le moule de conformation 24 et l'outil de compactage 28. Cette fenêtre 132 est par exemple constituée d'une portion de l'outil de compactage 128 réalisée dans un matériau transparent, ou de préférence, une ouverture traversant toute l'épaisseur de l'outil de compactage 28. Cette fenêtre 132 peut être disposée dans une zone de la portion d'échasse 128B qui est adjacente à la portion de pied 128A, de préférence au niveau du bloc de compactage central 128₁. Une telle fenêtre 132 permet notamment de vérifier que le ou les fils traceurs 22 visibles par cette fenêtre (par exemple le fil traceur de sortie de portée) sont correctement positionnés et le restent pendant l'opération de compactage.

Dans l'exemple illustré sur la figure 6, la portion d'échasse 128B de l'outil de compactage 128 est divisée en sept blocs de compactage séparés 128₁, 128₂, 128₃, 128₄, 128₅, 128₆ ,128₇.

Les blocs de compactage 128₁, 128₂, 128₃, 128₄, 128₅, 128₆ ,128₇ peuvent aussi descendre pour compacter la préforme 10b avec des vitesses différentes et/ou des forces exercées par ces blocs de compactage sur la préforme qui sont différentes, d'où des niveaux de pré-compactage ou taux volumique de fibres intermédiaire résultant de ce pré-compactage qui sont différents entre les blocs de compactage 128₁, 128₂, 128₃, 128₄, 128₅, 128₆, 128₇.

Dans l'exemple illustré, il y a sept blocs de compactage 128₁, 128₂, 128₃, 128₄, 128₅, 128₆ ,128₇ pour la portion d'échasse 128B, mais d'une façon générale, on peut en prévoir au moins cinq, par exemple exactement cinq, et cela que la division en blocs de compactage séparés concerne l'ensemble (unitaire) formé par la portion d'échasse 128B de l'outil de compactage 128 et la portion de pied 128A de l'outil de compactage ou seulement la portion d'échasse 128B de l'outil de compactage 128.

Un procédé de fabrication d'une aube de turbomachine composite, peut comprendre les étapes suivantes :
a) on réalise une préforme 10 par tissage en trois dimensions de fils 20a, 20b, 22, ladite préforme comprenant à la fois la pale 12, le pied 14 de l'aube et, entre la pale 12 et le pied 14, l'échasse 13 de l'aube, les fils 20 comprenant des fils traceurs 22 identifiables visuellement disposés au moins à la surface de la préforme ;
b) on découpe ladite préforme en laissant intacte une série de fils traceurs 22 situés le long d'une face de référence 16 de la préforme, ce par quoi on fournit une préforme découpée 10a apte à prendre la forme et les dimensions des parties constitutives de l'aube ;
c) on prédéforme ladite préforme découpée 10a, ce par quoi on fournit une préforme prédéformée 10b ;
d) on réalise un pré-compactage de ladite préforme prédéformée 10b, ce par quoi on fournit une préforme pré-compactée 10c ;
e) on réalise un mouillage de la préforme pré-compactée 10c et on réalise un séchage, par exemple en étuve, ce par quoi on fournit une préforme 10 rigidifiée ;
f) on fournit un moule d'injection 24 dans lequel on place ladite préforme 10 rigidifiée ;
g) on injecte dans ledit moule d'injection un liant comprenant une résine thermodurcissable afin d'imprégner toute la préforme 10 pré-déformée rigidifiée et de maintenir la disposition relative entre les fils 20a, 20b, 22 de la préforme rigidifiée ;
h) on chauffe ledit moule d'injection ; et
i) on sort du moule une pièce moulée composite présentant sensiblement la forme et les dimensions de ladite aube.

Pendant l'étape c) on réalise ladite prédéformation en plaçant la préforme découpée 10a dans le logement 26 délimité par un moule de conformation 24 et pendant l'étape d) on réalise ledit pré-compactage de ladite préforme pré-déformée 10b en utilisant un outil de compactage 128 mobile et coopérant avec le moule de conformation 24 pour former un ensemble de compactage définissant une direction longitudinale et un plan médian PM vertical parallèle à la direction longitudinale.

Pendant l'étape d), l'outil de compactage 28 peut descendre en direction du moule de conformation 24.

Lorsque l'outil de compactage 128 comprend plusieurs blocs de compactage 128₁, 128₂, 128₃, 128₄, 128₅, 128₆ ,128₇ comme précédemment décrit, l'outil de compactage 128 est apte, lors de l'étape d), à compacter au moins le pied 14 de ladite préforme pré-déformée 10b en commençant par le milieu et en allant progressivement jusqu'au bord de la préforme pré-déformée 10b.

Egalement, lorsque l'outil de compactage 128 comprend une portion de pied 128A et une portion d'échasse 128B comme précédemment décrit, ces portions 128A, 128B peuvent descendre en direction du moule de conformation 24 séparément.

Ainsi, grâce à ces dispositions avantageuses, on évite les flambages de fibres dans la zone de pied 14 et la zone d'échasse 13 de la préforme au cours de l'étape de compactage, ce qu'illustrent en partie les figures 8 et 9 précédemment décrites.

Dans ce procédé, lors de l'étape d), ledit outil de compactage 128 est apte à descendre en direction du moule de conformation 24 de façon que lesdits blocs de compactage descendent un à un en direction du moule de conformation 24 selon un ordre qui compacte toute la largeur de ladite préforme 10b en commençant par sa portion centrale passant par le plan médian PM puis chaque portion adjacente à la précédente, en s'écartant progressivement du plan médian PM. Lors de l'étape d), ledit outil de compactage 128 peut être apte à descendre en direction du moule de conformation 24 de façon symétrique par rapport audit plan médian PM.

Sur les figures, on a représenté le cas d'un pied 14 qui reste rectiligne tout au long du procédé de fabrication. On comprend que sans sortir du cadre de la présente invention, on peut envisager le cas d'un pied qui est vrillé, ou déformé selon toute autre action, lorsqu'on le place dans le moule de conformation 24.

Par ailleurs, selon une variante de réalisation non représentée, l'outil de compactage 128 couvre non seulement le pied 14 et l'échasse 13 de la pale, mais également une portion de la pale 12 de l'aube.

Egalement, dans la description qui précède, on a mentionné que l'outil de compactage 128 réalise une étape de pré-compactage, à savoir l'étape d). Cependant, il est également possible d'utiliser cet outil de compactage 128 alternativement comme élément du moule d'injection 24 et de l'utiliser seulement pour les étapes f) et g). Selon une autre variante, on peut utiliser ce même outil de compactage 128 à la fois pour l'étape d) de pré-compactage et pour les étapes f) et g).

Le verbe "comprendre", lorsqu'il est utilisé dans la présente demande, doit être interprété comme signifiant la présence de la caractéristique énoncée, mais n'exclut pas la présence ou l'addition d'une ou plusieurs autres caractéristiques.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention. De plus, les différentes caractéristiques de ces modes ou exemples de réalisation peuvent être utilisées seules ou être combinées entre elles, l'invention ne se limitant pas aux combinaisons spécifiques décrites dans le présent exposé.

## Revendications

1. Ensemble de compactage pour une préforme tissée obtenue par tissage en trois dimensions de fils (20) et destinée à former une aube de turbomachine composite, ladite préforme comprenant des parties prédéfinissant la pale (12), le pied (14) de l'aube et, entre la pale (12) et le pied (14), l'échasse de l'aube (13), l'ensemble de compactage comprenant un moule de conformation (24) délimitant un logement (26) ouvert vers le haut, apte à recevoir une préformé tissée (10a), et un outil de compactage (28) verticalement mobile et coopérant avec le moule de conformation (24) pour former un ensemble de compactage permettant de compacter ladite préforme (10b) lorsqu'elle est placée dans le logement (26), dans lequel l'outil de compactage (28) comprend au moins une portion de pied (128A), au moins une portion d'échasse (128B), la portion de pied (128A) et la portion d'échasse (128B) étant séparées, l'ensemble de compactage comprenant, en outre, une peau déformable (130) recouvrant au moins une partie de l'outil de compactage en face du moule de conformation (24).

2. Ensemble de compactage selon la revendication 1, dans lequel la portion de pied (128A) et/ou la portion d'échasse (128B) est divisée en au moins trois blocs de compactage séparés (128₁-128₇), parmi lesquels un bloc de compactage central (128₁), lesdits blocs de compactage (128₁-128₇) étant configurés pour descendre en direction du moule de conformation (24) de façon indépendante, en commençant par le bloc de compactage central (128₁).

3. Ensemble de compactage selon la revendication 1ou 2, dans lequel la portion de pied (128A) est monobloc et dans lequel la portion d'échasse (128B) est divisée en au moins trois blocs de compactage séparés.

4. Ensemble de compactage selon l'une quelconque des revendications 1 à 3, dans lequel la peau déformable (130) recouvre au moins toute la surface de la portion d'échasse en face du moule de conformation.

5. Ensemble de compactage selon l'une quelconque des revendications 1 à 4, dans lequel l'outil de compactage (128) a au moins une fenêtre (132) configurée pour visualiser la position d'au moins un fil traceur (22) lorsque la préforme est placé dans le logement (26).

6. Procédé de fabrication d'une aube de turbomachine composite, comprenant les étapes suivantes :
a) on réalise une préforme par tissage en trois dimensions de fils (20a, 20b, 22), ladite préforme comprenant des parties définissant la pale (12), le pied (14) de l'aube et, entre la pale (12) et le pied (14), l'échasse de l'aube (13), les fils (20a, 20b, 22) comprenant des fils traceurs (22) identifiables visuellement disposés au moins à la surface de la préforme ;
b) on découpe ladite préforme en laissant intacte une série de fils traceurs (22) situés le long d'une face de référence (16) de la préforme, ce par quoi on obtient une préforme découpée (10a) configurée pour prédéfinir la forme et les dimensions des parties constitutives de l'aube ;
c) on pré-déforme ladite préforme découpée (10a), ce par quoi on obtient une préforme pré-déformée (10b) ;
d) on réalise un pré-compactage de ladite préforme pré-déformée (10b), ce par quoi on obtient une préforme pré-compactée (10c) ;
e) on réalise un mouillage et un séchage de la préforme pré-compactée (10c), ce par quoi on obtient une préforme rigidifiée ;
f) on fournit un moule d'injection dans lequel on place ladite préforme rigidifiée ;
g) on injecte dans ledit moule d'injection un liant comprenant une résine thermodurcissable afin d'imprégner toute la préforme rigidifiée et de maintenir la disposition relative entre les fils (20a, 20b, 22) de la préforme rigidifiée;
h) on chauffe ledit moule d'injection ; et
i) on sort du moule une pièce moulée composite présentant sensiblement la forme et les dimensions de ladite aube,
dans lequel, pendant l'étape c), on réalise ladite pré-déformation en plaçant la préforme découpée (10a) dans un logement (26) délimité par un moule de conformation (24) et en ce que pendant l'étape d) on réalise le pré-compactage
procédé dans lequel lors de l'étape d), au moins la partie de pied (12) de la préforme est pré-compactée (10b) et pendant les étapes c) et d), on utilise un ensemble de compactage selon l'une quelconque des revendications 1 à 5.

7. Aube composite de turbomachine ayant un pied (14), une pale (12) et une échasse (13) constituant une partie de transition entre le pied (14) et la pale (12), l'aube comprenant une préforme de fibres tissées en trois dimensions compactée et imprégnée de liant, les fibres de la couche extérieure de la préforme, situées dans la zone de l'échasse (13) adjacente à la pale (12) et qui longe le bord d'attaque ou de fuite de l'aube, ayant un angle de déviation (A1) inférieur à 20°, l'aube étant obtenue par le procédé selon la revendication 6.

8. Turbomachine comprenant une aube composite selon la revendication 7.

## Patentansprüche

1. Verdichtungsanordnung für einen gewebten Vorformling, der durch dreidimensionales Weben von Fäden (20) erhalten wird und dazu bestimmt ist, eine Verbundschaufel einer Turbomaschine zu bilden, wobei der Vorformling Teile umfasst, welche das Blatt (12), den Fuß (14) der Schaufel sowie zwischen dem Blatt (12) und dem Fuß (14) die Stelze der Schaufel (13) vordefinieren, wobei die Verdichtungsanordnung eine Gestaltungsform (24), die eine nach oben offene Aufnahme (26) begrenzt, welche geeignet ist, einen gewebten Vorformling (10a) aufzunehmen, sowie ein Verdichtungswerkzeug (28) umfasst, das vertikal beweglich ist und mit der Gestaltungsform (24) zusammenwirkt, um eine Verdichtungsanordnung zu bilden, die ermöglicht, den Vorformling (10b) zu verdichten, wenn er in der Aufnahme (26) angeordnet ist, wobei das Verdichtungswerkzeug (28) wenigstens einen Fußabschnitt (128A), wenigstens einen Stelzenabschnitt (128B) umfasst, wobei der Fußabschnitt (128A) und der Stelzenabschnitt (128B) getrennt sind, wobei die Verdichtungsanordnung ferner eine verformbare Außenhaut (130) umfasst, die wenigstens einen Teil des Verdichtungswerkzeugs gegenüber der Gestaltungsform (24) bedeckt.

2. Verdichtungsanordnung nach Anspruch 1, bei der der Fußabschnitt (128A) und/oder der Stelzenabschnitt (128B) in wenigstens drei getrennte Verdichtungsblöcke (128₁-128₇), darunter ein mittlerer Verdichtungsblock (128₁), unterteilt ist, wobei die Verdichtungsblöcke (128₁-128₇) dazu ausgelegt sind, beginnend mit dem mittleren Verdichtungsblock (128₁) sich unabhängig in Richtung der Gestaltungsform (24) nach unten zu bewegen.

3. Verdichtungsanordnung nach Anspruch 1 oder 2, bei welcher der Fußabschnitt (128A) einteilig ausgebildet ist und bei welcher der Stelzenabschnitt (128B) in wenigstens drei getrennte Verdichtungsblöcke unterteilt ist.

4. Verdichtungsanordnung nach einem der Ansprüche 1 bis 3, bei der die verformbare Außenhaut (130) wenigstens die gesamte Oberfläche des Stelzenabschnitts gegenüber der Gestaltungsform bedeckt.

5. Verdichtungsanordnung nach einem der Ansprüche 1 bis 4, bei der das Verdichtungswerkzeug (128) wenigstens ein Fenster (132) aufweist, das dazu ausgelegt ist, die Position wenigstens eines Tracerfadens (22) anzuzeigen, wenn der Vorformling in der Aufnahme (26) angeordnet ist.

6. Verfahren zur Herstellung einer Verbundschaufel einer Turbomaschine, umfassend die folgenden Schritte:
a) Ausbilden eines Vorformlings durch dreidimensionales Weben von Fäden (20a, 20b, 22), wobei der Vorformling Teile umfasst, welche das Blatt (12), den Fuß (14) der Schaufel sowie zwischen dem Blatt (12) und dem Fuß (14) die Stelze der Schaufel (13) definieren, wobei die Fäden (20a, 20b, 22) visuell erkennbare Tracerfäden (22) umfassen, die wenigstens auf der Oberfläche des Vorformlings angeordnet sind.
b) Schneiden des Vorformlings, wobei eine Reihe von Tracerfäden (22), die sich entlang einer Referenzfläche (16) des Vorformlings befinden, unversehrt gelassen wird, wodurch ein geschnittener Vorformling (10a) erhalten wird, der dazu ausgelegt ist, die Form und die Abmessungen der Bestandteile der Schaufel vorzudefinieren,
c) Vorverformen des geschnittenen Vorformlings (10a), wodurch ein vorverformter Vorformling (10b) erhalten wird,
d) Durchführen einer Vorverdichtung des vorverformten Vorformlings (10b), wodurch ein vorverdichteter Vorformling (10c) erhalten wird,
e) Durchführen eines Befeuchtens und eines Trocknens des vorverdichteten Vorformlings (10c), wodurch ein versteifter Vorformling erhalten wird,
f) Bereitstellen einer Spritzgussform, in welcher der versteifte Vorformling angeordnet wird,
g) Einspritzen eines Bindemittels, welches ein in Wärme aushärtendes Harz umfasst, in die Spritzgussform, um den gesamten versteiften Vorformling zu imprägnieren und die Relativanordnung zwischen den Fäden (20a, 20b, 22) des versteiften Vorformlings aufrechtzuerhalten,
h) Erhitzen der Spritzgussform, und
i) Herausnehmen eines Verbundformteils aus der Form, das im Wesentlichen die Form und die Abmessungen der Schaufel aufweist,
wobei während des Schrittes c) die Vorverformung durchgeführt wird, indem der geschnittene Vorformling (10a) in einer durch eine Gestaltungsform (24) begrenzten Aufnahme (26) angeordnet wird und dass während des Schrittes d) die Vorverdichtung durchgeführt wird,
Verfahren, bei dem während des Schrittes d) wenigstens der Fußteil (12) des Vorformlings vorverdichtet wird (10b) und während der Schritte c) und d) eine Verdichtungsanordnung nach einem der Ansprüche 1 bis 5 verwendet wird.

7. Verbundschaufel einer Turbomaschine mit einem Fuß (14), einem Blatt (12) und einer Stelze (13), die einen Übergangsteil zwischen dem Fuß (14) und dem Blatt (12) bildet, wobei die Schaufel einen Vorformling aus dreidimensional gewebten Fasern umfasst, der verdichtet und mit Bindemittel imprägniert ist, wobei die Fasern der äußeren Schicht des Vorformlings, die in dem Bereich der Stelze (13), welcher zu dem Blatt (12) benachbart ist und entlang der Vorder- oder Hinterkante der Schaufel verläuft, gelegen sind, einen Ablenkwinkel (A1) von weniger als 20° aufweisen, wobei die Schaufel durch das Verfahren nach Anspruch 6 erhalten wird.

8. Turbomaschine, die eine Verbundschaufel nach Anspruch 7 umfasst.

## Claims

1. A compacting assembly for compacting a woven preform obtained by three-dimensionally weaving yarns (20) in order to form a composite blade for a turbine engine, said preform having portions for predefining the airfoil(12), the root (14) of the blade, and between the airfoil (12) and the root (14), the tang (13) of the blade, the compacting assembly comprising a shaper mold (24) defining an upwardly open housing (26) suitable for receiving a woven preform (10a), and a vertically movable compacting tool (28) for co-operating with the shaper mold (24) to form a compacting assembly enabling said preform (10b) to be compacted when it is placed in the housing (26), wherein the compacting tool (28) comprises at least a root portion (128A), at least one tang portion (128B), the root portion (128A) and the tang portion (128B) being separate, the compacting assembly further comprising a deformable skin covering at least part of the compacting tool facing the shaper mold.

2. A compacting assembly according to claim 1, wherein the root portion (128A) and/or the tang portion (128B) is/are subdivided into at least three separate compacting blocks (128₁-128₇), including a central compacting block (128₁), said compacting blocks (128₁-128₇) being configured to move down towards the shaper mold (24) in independent manner, beginning with the central compacting block (128₁).

3. A compacting assembly according to claim 1 or 2, wherein the root portion (128A) is a single block and wherein the tang portion (128B) is subdivided into at least three separate compacting blocks.

4. A compacting assembly according to any one of claims 1 to 3, wherein the deformable skin (130) covers at least the entire surface of the tang portion facing the shaper mold.

5. A compacting assembly according to any one of claims 1 to 4, wherein the compacting tool (128) has at least one window (132) configured to view the position of at least one tracer yarn (22) when the preform is placed in the housing (26).

6. A method of fabricating a composite blade for a turbine engine, the method comprising the following steps:
a) making a preform by three-dimensionally weaving yarns (20a, 20b, 22), said preform having portions defining the airfoil (12), the root (14) of the blade, and between the airfoil (12) and the root (14), the tang (13) of the blade, the yarns (20a, 20b, 22) including tracer yarns (22) that are visually identifiable arranged at least at the surface of the preform;
b) cutting out said preform while leaving intact a series of tracer yarns (22) situated along a reference face (16) of the preform, thereby obtaining a cut-out preform (10a) configured to predefine the shape and the dimensions of portions constituting the blade;
c) pre-deforming said cut-out preform (10a), thereby obtaining a pre-deformed preform (10b);
d) pre-compacting said pre-deformed preform (10b), thereby obtaining a pre-compacted preform (10c);
e) wetting and drying the pre-compacted preform (10c), thereby obtaining a stiffened preform;
f) providing an injection mold in which said stiffened preform is placed;
g) injecting a binder comprising a thermosetting resin into said injection mold in order to impregnate the entire stiffened preform and maintain the relative positioning between the yarns (20a, 20b, 22) of the stiffened preform;
h) heating said injection mold; and
i) extracting from the mold a composite molded part presenting substantially the shape and the dimensions of said blade;
wherein, during step c), said pre-deformation is performed by placing the cut-out preform (10a) in a housing (26) defined by a shaper mold (24) and in that, during step d), the pre-compacting is performed,
wherein, during step d), at least the root portion (12) of the preform is pre-compacted (10b) and during steps c) and d), use is made of a compacting assembly according to any one of claims 1 to 5.

7. A turbine engine composite blade having a root (14), an airfoil (12), and a tang (13) constituting a transition part between the root (14) and the airfoil (12), the blade comprising a preform of three-dimensionally woven fibers that have been compacted and impregnated with binder, the fibers of the outer layer of the preform, situated in the tang zone (13) adjacent to the airfoil (12) and running along the leading or trailing edge of the blade presenting respective deflection angles (A1) of less than 20°, the blade being obtained by the method according to claim 6.

8. A turbine engine including a composite blade according to claim 7.
